# EUROPÄISCHE PATENTSCHRIFT

(11) **EP 1 081 475 B1**
(45) Veröffentlichungstag und Bekanntmachung des Hinweises auf die Patenterteilung: **12.10.2005**
(21) Anmeldenummer: 00117872.2
(22) Anmeldetag: 19.08.2000
(51) Int. Cl.: G01J 5/06

(54) **Temperaturstabilisierbarer Infrarot-Sensor und Infrarot-Thermometer mit einem derartigen Sensor**
Infrared detector with temperature stabilisation and infrared thermometer including such a detector
Détecteur de rayons infrarouges avec stabilisation de température et thermomètre infrarouge incorporant ce détecteur

(30) Priorität: 03.09.1999 DE 19942214
(43) Veröffentlichungstag der Anmeldung: 07.03.2001
(73) Patentinhaber: Braun GmbH, 61476 Kronberg (DE)
(72) Erfinder: Kraus, Bernhard, 35619 Braunfels (DE)

(56) Entgegenhaltungen:
- EP-A- 0 391 128
- WO-A-00/58703
- WO-A-95/22928
- US-A- 4 602 642
- US-A- 4 904 090
- US-A- 4 907 895
- US-A- 5 127 742
- US-A- 5 874 736
- PATENT ABSTRACTS OF JAPAN vol. 017, no. 179 (P-1517), 7. April 1993 (1993-04-07) & JP 04 335120 A (TOSHIBA CORP), 24. November 1992 (1992-11-24)

## Beschreibung

Die Erfindung betrifft ein Infrarot-Thermometer mit einer beheizbaren Meßspitze insbesondere zur Fiebermessung im Ohr.

In der DE 199 13 672 ist ein Infrarot-Thermometer mit einer Meßspitze beschrieben, die einen Infrarot-Wellenleiter und einen an dessen Ende angeordneten Strahlungssensor aufweist. Die Meßspitze und/oder eine in an sich bekannter Weise auf die Meßspitze aufsetzbare Schutzkappe sind/ist so ausgestaltet, daß nur der vordere Bereich der Meßspitze bzw. der Schutzkappe auf eine Temperatur aufheizbar ist, die in etwa der normalen Ohrkanaltemperatur entspricht. Da der in der Meßspitze befindliche Infrarotsensor nur ein begrenztes Gesichtsfeld hat, ist es nämlich zur Verringerung von Meßfehlern ausreichend, wenn nur der Teil der Meßspitze dieselbe Temperatur wie der Ohrkanal hat, der mit dem im Gesichtsfeld des Infrarotsensors liegenden Teil des Ohrkanals in thermische Wechselwirkung tritt. Der relativ kleine beheizbare Bereich kann nur dann energiesparend beheizt werden, wenn er gegenüber dem nicht beheizbaren Teil der Meßspitze thermisch isoliert ist, wodurch sich jedoch der Aufbau der Meßspitze kompliziert.

Aus der GB 2090054 A ist ein Strahlungsdetektor mit einem Thermistor bekannt, der von zwei Heizelementen auf einer konstanten Temperatur gehalten wird. Die Heizelemente bilden zusammen mit einem Tragring eine Kapsel, die den Thermistor umgibt. Die Kapsel ist von einem Gehäuse umgeben, das ein strahlungsdurchlässiges Fenster aufweist, durch das die zu detektierende Strahlung ins Gehäuse und durch ein Loch in einem der Heizelemente in die Kapsel und zum Thermistor gelangen kann. Dieser Strahlungdetektor ist nur recht aufwendig herstellbar und daher entsprechend teuer.

Aus der US-A-5,010,315 ist ein Wärmestrahlungssensorelement mit zwei NTC-Widerständen bekannt, deren Temperatur durch je eine Heizschicht konstant gehalten wird. Zwischen den Heizschichten und den NTC-Widerständen sind Isolierschichten angeordnet.

Aus der DD 147872 ist ein Thermopile-Sensor mit einem Gehäuse bekannt, das ein strahlungsdurchlässiges Fenster aufweist. Im Gehäuse ist ein Sensorelement auf einem Trägerkörper angeordnet, der mit einer zentralen Bohrung versehen ist, die von einer Membran überspannt ist. Die Kaltstellen und die Warmstellen des Sensorelements befinden sich auf der Membran, und zwar die Kaltstellen im Bereich des Trägerkörpers und die Warmstellen im Bereich der Bohrung. Nur die Warmstellen sind durch mindestens ein Heizelement beheizbar.

Aus der US 4,904,090 und der EP 0391128 A1 sind Temperaturmeßeinrichtungen mit einem beheizbaren/kühlbaren Infrarot-Sensor bekannt. Zur Temperaturmessung wird die Temperatur des Infrarot-Sensors solange geändert, bis dessen Ausgangssignal "Null" wird. Eine beheizbare Meßspitze ist nicht offenbart. US 4 602 642 beschreibt ein Infrarot-Ohrthermometer mit beheizbaren Infrarot-Sensor und Gehäuse. Aus WO 95/22928 ist ein Infrarot-Ohrthermomether bekannt, dessen Infrarot-Sensor am vorderen Ende der Meßspitze angeordnet ist.

Es ist Aufgabe der vorliegenden Erfindung ein Infrarot-Thermometer mit einer einfach aufgebauten beheizbaren Meßspitze und hoher Meßgenauigkeit anzugeben.

Bei einem erfindungsgemäßen Infrarot-Thermometer ist der Infrarot-Sensor direkt am vorderen Ende einer Meßspitze angeordnet. Der Vorteil dieser Ausführung besteht darin, daß durch den beheizbaren/kühlbaren Infrarot-Sensor dann praktisch das gesamte vordere Ende der Meßspitze, oder zumindest die Stimfläche der Meßspitze auf die gewünschte Temperatur gebracht werden, und daher beim Einführen der Meßspitze in den Ohrkanal das thermische Gleichgewicht im Ohrkanal praktisch nicht gestört wird, und dadurch Meßfehler vermieden werden. Die Meßspitze kann eine an sich bekannte Form oder einen an sich bekannten Aufbau haben, insbesondere auch biegsam sein. Als Beispiel für eine derartige Meßspitze wird auf die EP 0588631 A2 verwiesen, die eine flexible Meßspitze beschreibt, deren Flexibilität durch einen auf ihrem äußeren Umfang ausgebildeten Schlitz oder Balg erhöht ist. Die Meßspitze kann femer auf ihrer Außenseite Rippen, Vertiefungen oder dergleichen aufweisen.

Ein erfindungsgemäßes Infrarot-Thermometer weist einen Infrarot-Sensor mit mindestens einem Infrarot-Sensorelement, einem Heiz- und/oder Kühlelement und einem Gehäuse mit einem infrarotdurchlässigen Fenster auf. Das Fenster kann beispielsweise aus einem Chalcogenit-Glas bestehen, das infrarotdurchlässig und leicht formbar ist. Das Sensorelement ist so im Gehäuse angeordnet, daß Infrarot-Licht durch das Fenster zum Sensorelement gelangen kann. Das Heiz/Kühlelement ist mit dem Fenster wärmeleitend verbunden. Besonders vorteilhaft ist es, wenn das Gehäuse so aufgebaut ist, daß innerhalb des Gehäuses nur allenfalls geringe Temperaturgradienten auftreten können. Das Heiz/Kühlelement ist daher vorzugsweise so angeordnet, daß sich beim Aufheizen oder Kühlen das Gehäuse und das Fenster gleichmäßig erwärmen bzw. abkühlen. Vorzugsweise sind daher das Fenster und das Gehäuse wärmeleitend miteinander verbunden und bestehen aus Materialien mit hoher Wärmeleitfähigkeit, beispielsweise das Gehäuse aus Kupfer und das Fenster aus Silizium. Es können auch mehrere Heiz/Kühlelemente vorhanden sein, von denen eines oder mehrere am Gehäuse und mindestens ein weiteres am Fenster des Infrarot-Sensors geordnet ist. Mit dem Begriff "Heiz/Kühlelement" sind beispielsweise ein als NTC- oder PTC-Widerstand oder Transistor ausgebildetes Heizelement und auch ein als Peltierelement ausgebildetes Heiz- und Kühlelement gemeint. Das Heiz/Kühlelement ist vorzugsweise elektrisch heizbar bzw. kühlbar.

Das Heiz/Kühlelement ist vorzugsweise am Gehäuse des Infrarot-Sensors angebracht. Es kann auch aus einer Folie, beispielsweise einer Polyimidfolie, bestehen, auf die eine leiterbahnförmige Metallschicht, beispielsweise aus Aluminium, Kupfer, Gold oder einer Chrom/Nickel-Legierung, oder eine Silber/Graphit-Paste aufgebracht ist. Ein Heizelement, das beispielsweise aus einer leiterbahnförmigen Metallschicht oder einer Schicht aus einem elektrisch leitfähigen Kunststoff besteht, kann auch direkt auf das Fenster aufgebracht sein. Bei einer anderen Ausführung eines Infrarot-Sensors ist das Fenster durch einen Heizdraht aus beispielsweise Konstantan beheizbar, der um das Fenster herumläuft und mit diesem gut wärmeleitend verbunden ist. Bei einer besonders eleganten Ausführung eines Infrarot-Sensors besteht das Fenster aus einem Halbleiter, insbesondere Silizium, in dem durch Dotierung eine elektrische Leiterbahn gebildet ist, die als Widerstands-Heizelement dienen kann.

Der Infrarot-Sensor weist mindestens einen Temperatursensor auf, der vorzugsweise in an sich bekannter Weise mit dem Infrarot-Sensorelement wärmeleitend verbunden ist. Bei anderen Ausführungen eines Infrarot-Sensors wird das Heiz/Kühlelement selbst Temperatursensor verwendet. Besteht das Infrarot-Sensorelement aus einem Thermopile, so kann in an sich aus der EP 0502277 bekannter Weise auch das Thermopile selbst als Temperatursensor dienen. Der Infrarot-Sensor besitzt dann Anschlüsse für das/die Infrarot-Sensorelement(e) und für das/die Heizelement(e). Wenn das Heizelement oder Infrarot-Sensorelement nicht auch als Temperatursensor verwendet ist, weist der Infrarot-Sensor noch zusätzlich Anschlüsse für den Temperatursensor auf. Über seine Anschlüsse ist der Temperatur-Sensor mit einer Steuereinrichtung verbindbar.

Die Steuereinrichtung ermittelt aus meßbaren Kenngrößen des Temperatursensors, Heiz/Kühlelements oder Infrarot-Sensorelements, wie z.B. dem elektrischen Widerstand, der Schwellenspannung oder der Durchlaßspannung, die Temperatur des Temperatursensors und somit auch die des Infrarot-Sensors. Die Steuereinrichtung enthält vorzugsweise für jedes Heiz/Kühlelement eine Regelschaltung, die abhängig von einem einstellbaren Temperatursollwert dem/den Heizelement(en) die für das Aufheizen, Kühlen und/oder Konstanthalten der Temperatur jeweils nötige Energie zuführt. Auf diese Weise kann der Infrarot-Sensor auf eine bestimmte Temperatur gebracht und temperaturstabilisiert werden. Die Steuereinrichtung ist ferner mit einer Energiequelle, beispielsweise einer Batterie verbindbar.

Die Steuereinrichtung kann auch im Infrarot-Sensor angeordnet sein, der dann abgesehen von den Anschlüssen für das/die Infrarot-Sensorelement(e) Anschlüsse zur Eingabe eines Temperatursollwerts und zum Verbinden mit einer Energiequelle aufweist.

Der Infrarot-Sensor enthält ein oder mehrere Infrarot-Sensorelement(e), insbesondere Thermopile(s), wie sie an sich aus dem Stand der Technik bekannt sind. Beispielsweise ist aus der EP 0566156 B1 ein Infrarot-Sensor mit zwei infrarotempfindlichen Elementen bekannt, von denen das eine gegen Infrarotstrahlung abgeschirmt ist. Durch Vergleich der von den beiden Elementen gelieferten Signale läßt sich ein Meßsignal erhalten, das der Menge der auftreffenden Infrarotstrahlung entspricht und weitgehend frei von elektrischem Rauschen und thermischen Störungen ist. Das/die Infrarot-Sensorelement(e) können aber auch den aus der DE 197 10 946 bekannten Aufbau haben.

Bei einer bevorzugten Ausführung eines Infrarot-Sensors sind mehrere Infrarot-Sensorelemente matrixförmig angeordnet. Das Fenster dieses Infrarot-Sensors ist dann vorzugsweise als Linse ausgebildet. Die Infrarot-Sensorelemente befinden sich vorzugsweise in der Brennebene der Linse.

Weitere Merkmale und Vorteile der vorliegenden Erfindung ergeben sich aus der nachfolgenden Beschreibung bevorzugter Ausführungsbeispiele für erfindungsgemäße Infrarot-Sensoren und Infrarot-Thermometer, die in den Zeichnungen dargestellt sind. In den Zeichnungen sind gleiche Bauteile mit gleichen Bezugszeichen versehen. Es zeigt in schematischer Darstellung:
- Fig. 1: ein erstes Ausführungsbeispiel eines Infrarot-Sensors im Schnitt;
- Fig. 2: eine Draufsicht auf den Infrarot-Sensor nach Fig. 1;
- Fig. 3: eine erste Meßspitze eines Infrarot-Thermometers mit dem Infrarot-Sensor nach Fig. 2;
- Fig. 4: ein zweites Ausführungsbeispiel eines Infrarot-Sensors, der vorne an einer zweiten Meßspitze eines Infrarot-Thermometers angeordnet ist;
- Fig. 5: ein drittes Ausführungsbeispiel eines Infrarot-Sensors, der vorne an einer dritten Meßspitze eines Infrarot-Thermometers angeordnet ist;
- Fig. 6: ein viertes Ausführungsbeispiel eines Infrarot-Sensors im Schnitt.

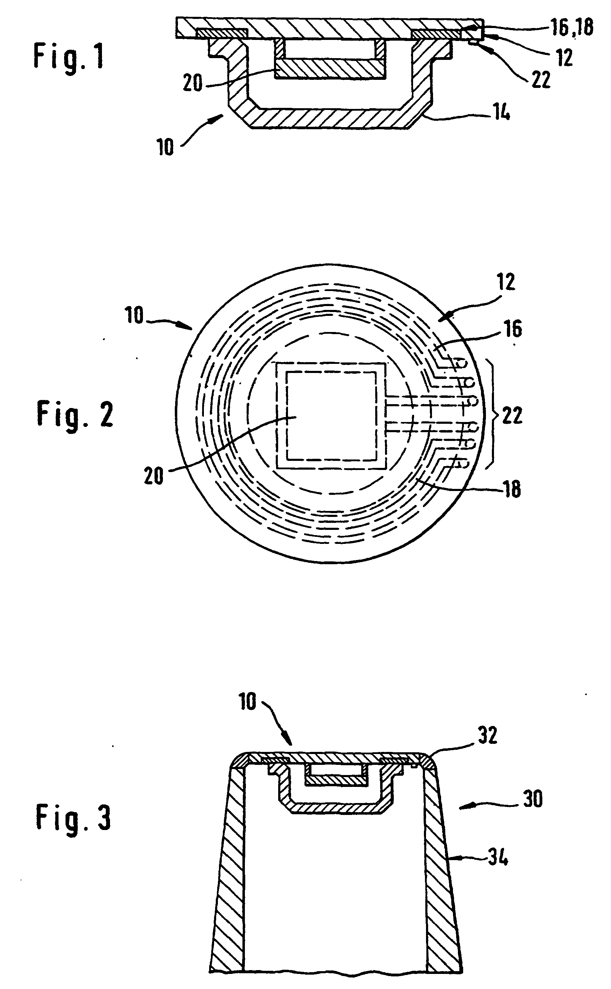

Fig. 1 zeigt einen ersten Infrarot-Sensor 10 mit einem ein infrarotdurchlässiges Fenster 12 aufweisenden Gehäuse 14. Das Fenster 12 besteht vorzugsweise aus Silizium. Im Fenster 12 sind ein Heizelement 16 und ein Temperatursensor 18 ausgebildet. Ein Infrarot-Sensorelement 20 zur Umwandlung der erfaßten Infrarotstrahlung in ein elektrisches Ausgangssignal ist innerhalb des Gehäuses 14 am Fenster 12 befestigt. Für das Ausgangssignal des Infrarot-Sensorelements 20 und des Temperatursensors 18 sowie die Stromversorgung des Heizelements 16 sind je zwei Anschlüsse 22 am Rand des Fensters 12 vorhanden. Die Ausgangssignale des Infrarot-Sensorelements 20 und des Temperatursensors 18 können mittels einer in der Figur nicht dargestellten Meßelektronik ausgewertet, und über eine in der Figur nicht dargestellte Anzeigeeinrichtung eine gemessene Strahlungstemperatur angezeigt werden.

Wie in Figur 2 dargestellt ist, besitzt das Fenster 12 die Form einer Scheibe. Das Heizelement 16 besitzt eine leiterbahnförmige Gestalt und ist ringförmig am Rand des Fensters 12 angeordnet. Der Temperatursensor 18 besitzt ebenfalls eine leiterbahnförmige Gestalt und verläuft weiter innen parallel zum Heizelement 16. Wegen der räumlichen Nähe zwischen dem Heizelement 16 und dem Temperatursensor 18 läßt sich die Temperatur des Infrarot-Sensors 10 sehr genau und mit geringer Trägheit regeln. Das Infrarot-Sensorelement 20, vorzugsweise ein oder mehrere Thermopile(s), befindet sich in der Mitte des Fensters 12.

Die in Fig. 3 schematisch dargestellte erste Meßspitze 30 eines erfindungsgemäßen Infrarot-Thermometers weist an ihrem vorderen Ende den in den Figuren 1 und 2 dargestellten Infrarot-Sensor 10 auf. Dieser ist mittels eines Metallrings 32 an seinem Fenster 12 gehaltert. Der Metallring ist an einem vorzugsweise aus einem Kunststoff bestehenden Schaft 34 befestigt, dessen äußere Form und Abmessungen an den menschlichen Ohrkanal angepaßt sind.

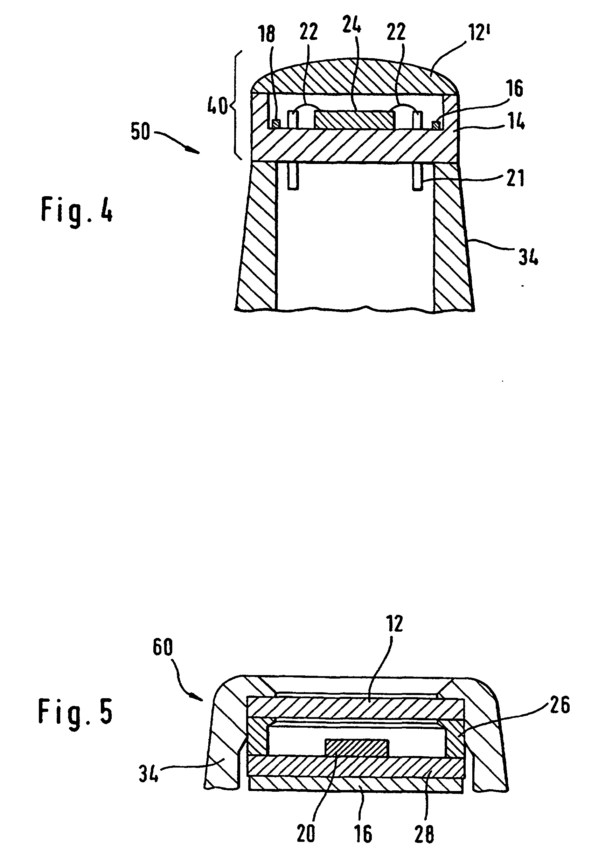

Fig. 4 zeigt eine zweite Meßspitze 50 eines erfindungsgemäßen Infrarot-Thermometers, bei der ein zweiter Infrarot-Sensor 40 direkt auf den Schaft 34 aufgesetzt ist, sodaß das ganze vordere Ende der Meßspitze 50 durch den Infrarot-Sensor 40 gebildet und beheizbar bzw. kühlbar ist. Dieser weist ein nach außen gewölbtes Fenster 12' auf, das auftreffende Infrarot-Strahlung auf eine vorzugsweise matrixförmige Anordnung 24 aus mehreren Infrarot-Sensorelementen abbildet. Das Heiz/Kühlelement 16, der Temperatursensor 18 und die Infrarot-Sensorelemente sind innen auf dem Boden des Gehäuses 14 des Infrarot-Sensors 40 angeordnet. Sie können auch auf einer nicht dargestellten Foile angebracht sein, wobei sich vorzugsweise auf der Oberseite der Folie die Anordnung 24 aus Infrarot-Sensorelementen befindet, und auf der Unterseite der Folie mindestens ein Heiz/Kühlelement und ggfs. ein Temperatursensor in Gestalt einer oder mehrerer Leiterbahn(en), die mit dem Boden des Gehäuses gut wärmeleitend verbunden sind. Die Anschlüsse 22 der Anordnung 24 von Infrarot-Sensorelementen sind nur schematisch dargestellt, und über Anschlußstifte 21 nach außen geführt.

Fig. 5 zeigt eine dritte Meßspitze 60 eines erfindungsgemäßen Infrarot-Thermometers mit einem dritten Infrarot-Sensor. Die Meßspitze weist einen Schaft 34 auf, in den der Infrarot-Sensor eingesetzt ist, sodaß die Seitenwände 26 des Infrarot-Sensors und der äußere Rand des Fensters 12 vom Schaft 34 umgeben sind. Ein Infrarot-Sensorelement 20 oder eine Anordnung aus mehreren Infrarot-Sensoretementen ist gegenüber dem Fenster 12 am Gehäuseboden 28 des Infrarot-Sensors angeordnet. Das Infrarot-Sensorelement besteht vorzugsweise aus einem Thermopile. Ein in Fig. 5 nicht dargestellter Temperatursensor ist in an sich bekannter Weise in der Nähe der Kaltstellen des Thermopile angeordnet. Ebenfalls am Gehäuseboden 28 jedoch außerhalb des Gehäuses des Infrarot-Sensors ist ein Heiz- und/oder Kühlelement 16 angebracht.

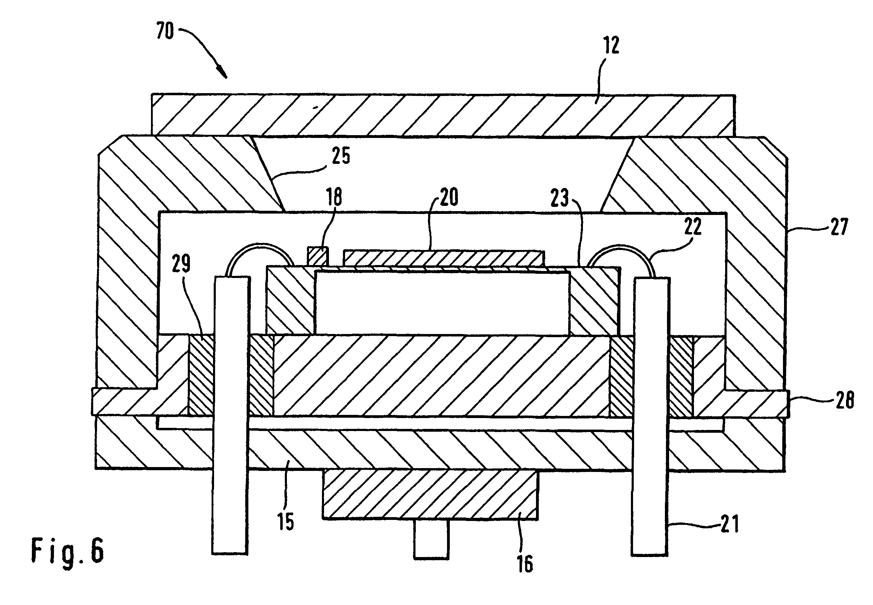

Fig. 6 zeigt einen vierten Infrarot-Sensor 70 mit einem Gehäuseoberteil 27, einem infrarotdurchlässigen Fenster 12 und einem Gehäuseboden 28. Ein Infrarot-Sensorelement 20 oder eine Anordnung aus mehreren Infrarot-Sensorelementen und ein Temperatursensor 18 ist innerhalb des Gehäuses auf einem Rahmen 23 befestigt. Die Anschlüsse 22 des Infrarot-Sensorelements 20 und des Temperatursensors 18 sind nur schematisch dargestellt, und über Anschlußstifte 21 durch Durchführungen 29 im Gehäuseboden 28 nach außen geführt. Das Heiz/Kühlelement 16 ist an einer Wärmeverteilplatte 15 angebracht, die außen am Gehäuseboden 28 wärmeleitend befestigt ist. Sie kann aber auch an anderer Stelle des Gehäuses angebracht sein. Das Gehäuseoberteil 27 weist eine Öffnung auf, die vom Fenster 12 verschlossen ist. Die Seitenwände 25 der Öffnung sind so abgeschrägt, daß durch das Fester 12 eindringende Infrarot-Strahlung in Richtung auf das Infrarot-Sensorelement 20 reflektiert wird.

Die in Zusammenhang mit einem der offenbarten Ausführungsbeispiele beschriebenen Merkmale eines Infrarot-Sensors oder erfindungsgemäßen Infrarot-Thermometers können entsprechend auch bei einem anderen Ausführungsbeispiel realisiert sein.

## Patentansprüche

1. Infrarot-Ohrthermometer mit einer Meßspitze, deren vorderes Ende beheizbar ist, und einem beheizbaren Infrarot-Sensor, der mindestens ein Infrarot-Sensorelement (20; 24), ein Heiz- und/oder Kühlelement (16) und ein Gehäuse (14; 26, 27, 28) mit einem infrarotdurchlässigen Fenster (12) aufweist, **dadurch gekennzeichnet, daß** der Infrarot-Sensor am vorderen Ende der Meßspitze angeordnet ist und das Heiz- und/oder kühlelement (16) mit dem Fenster (12) wärmeleitend verbunden ist.

2. Infrarot-Thermometer nach Anspruch 1, **dadurch gekennzeichnet, daß** der Infrarot-Sensor mindestens einen Temperatursensor (18) aufweist, der mit dem Sensorelement (20) und/oder dem Fenster (12) und/oder dem Gehäuse (14; 26, 27, 28) wärmeleitend verbunden ist.

3. Infrarot-Thermometer nach Anspruch 2, **dadurch gekennzeichnet, daß** das Heiz/Kühlelement (16) oder das Infrarot-Sensorelement (20) als Temperatursensor (18) verwendbar ist.

4. Infrarot-Thermometer nach Anspruch 2 oder 3, **dadurch gekennzeichnet, daß** das Fenster (12) aus einem Halbleiter besteht, und daß das Heizelement (16) und/oder der Temperatursensor (18) im Fenster durch Dotierung eines leiterbahnförmigen Bereichs gebildet ist.

5. Infrarot-Thermometer nach Anspruch 2 oder 3, **dadurch gekennzeichnet, daß** das Heiz- und/oder Kühlelement (16) und/oder der Temperatursensor (18) aus einer auf eine Folie aufgebrachten Leiterbahn oder Paste bestehen.

6. Infrarot-Thermometer nach Anspruch 5, **dadurch gekennzeichnet, daß** die Sensorelemente (20) auf der Oberseite einer Folie angeordnet sind, und daß auf der Unterseite der Folie das Heiz/Kühlelement (16) und/oder der Temperatursensor (18) angeordnet ist/sind.

7. Infrarot-Thermometer nach Anspruch 2 oder 3, **dadurch gekennzeichnet, daß** das Heiz- und/oder Kühlelement (16) mit einer Wärmeverteilplatte (15) wärmeleitend verbunden ist, und die Wärmeverteilplatte (15) mit dem Gehäuse wärmeleitend verbunden ist.

8. Infrarot-Thermometer nach einem der vorhergehenden Ansprüche, **dadurch gekennzeichnet, daß** das Fenster (12) und das Gehäuse (14; 26, 27, 28) wärmeleitend miteinander verbunden sind und aus Materialien mit hoher Wärmeleitfähigkeit bestehen.

9. Infrarot-Thermometer nach einem der vorhergehenden Ansprüche, **dadurch gekennzeichnet, daß** das Fenster (12) als Linse ausgebildet ist.

10. Infrarot-Thermometer nach einem der vorhergehenden Ansprüche, **dadurch gekennzeichnet, daß** ein Gehäuseoberteil (27) des Infrarot-Sensors eine Öffnung aufweist, deren Seitenwände (25) abgeschrägt sind.

11. Infrarot-Thermometer nach Anspruch 9 oder 10, **dadurch gekennzeichnet, daß** das Infrarot-Sensorelement (20) oder die Infrarot-Sensorelemente der Anordnung (24) aus mindestens einem Thermopile bestehen.

12. Infrarot-Thermometer nach einem der vorhergehenden Ansprüche, **dadurch gekennzeichnet, daß** das Infrarot-Thermometer oder der Infrarot-Sensor eine Steuereinrichtung zur Regelung der Heiz/Kühlleistung des Heiz- und/oder Kühlelements (16) aufweist.

13. Infrarot-Thermometer nach Anspruch 12, **dadurch gekennzeichnet, daß** durch die Steuereinrichtung die Temperatur des Infrarot-Sensors durch Messung bestimmter Kenngrößen des Heiz/Kühlelements (16) oder des Infrarot-Sensorelements (20) oder des Temperatursensors (18) ermittelbar ist.

14. Infrarot-Thermometer nach Anspruch 11, **dadurch gekennzeichnet, daß** die Meßspitze biegsam ist.

## Claims

1. Infrared ear thermometer with a test prod whose front end is heatable and a heatable infrared sensor which includes at least one infrared sensor element (20; 24), a heating and/or cooling element (16) and a casing (14; 26, 27, 28) with a window (12) that is transparent to infrared radiation,
**characterized in that** the infrared sensor is arranged at the front end of the test prod and the heating and/or cooling element (16) is in a heat-conducting connection to the window (12).

2. Infrared thermometer as claimed in claim 1,
**characterized in that** the infrared sensor includes at least one temperature sensor (18) which is in a heat-conducting connection to the sensor element (20) and/or the window (12), and/or the casing (14; 26, 27, 28).

3. Infrared thermometer as claimed in claim 2,
**characterized in that** the heating/cooling element (16) or the infrared sensor element (20) can be used as a temperature sensor (18).

4. Infrared thermometer as claimed in claim 2 or 3,
**characterized in that** the window (12) is a semiconductor, and **in that** the heating element (16) and/or the temperature sensor (18) in the window is formed by doping an area shaped like a conductor path.

5. Infrared thermometer as claimed in claim 2 or 3,
**characterized in that** the heating and/or cooling element (16) and/or the temperature sensor (18) are comprised of a conductor path or paste applied to a foil.

6. Infrared thermometer as claimed in claim 5,
**characterized in that** the sensor elements (20) are arranged on the top side of a foil, and **in that** the heating/cooling element (16) and/or the temperature sensor (18) are/is arranged on the bottom side of the foil.

7. Infrared thermometer as claimed in claim 2 or 3,
**characterized in that** the heating and/or cooling element (16) is in a heat-conducting connection to a heat distribution plate (15), and the heat distribution plate (15) is in a heat-conducting connection to the casing.

8. Infrared thermometer as claimed in any one of the preceding claims,
**characterized in that** the window (12) and the casing (14; 26, 27, 28) are interconnected in a heat-conducting fashion and are made of materials with a high thermal conductance.

9. Infrared thermometer as claimed in any one of the preceding claims,
**characterized in that** the window (12) is designed as a lens.

10. Infrared thermometer as claimed in any one of the preceding claims,
**characterized in that** a casing top (27) of the infrared sensor has an opening whose lateral walls (25) are chamfered.

11. Infrared thermometer as claimed in claim 9 or 10,
**characterized in that** the infrared sensor element (20) or the infrared sensor elements of the assembly (24) are comprised of at least one thermopile.

12. Infrared thermometer as claimed in any one of the preceding claims,
**characterized in that** the infrared thermometer or the infrared sensor includes a control means for controlling the heating/cooling capacity of the heating and/or cooling element (16).

13. Infrared thermometer as claimed in claim 12,
**characterized in that** the control means permits determining the temperature of the infrared sensor by measurement of defined characteristic magnitudes of the heating/cooling element (16), or the infrared sensor element (20), or the temperature sensor (18).

14. Infrared sensor as claimed in claim 11,
**characterized in that** the test prod is flexible.

## Revendications

1. Thermomètre auriculaire infrarouge, comportant une pointe de sonde dont l'extrémité avant peut être chauffée et un détecteur d'infrarouges pouvant être chauffé qui présente au moins un élément de détection d'infrarouges (20 ; 24), un élément de chauffage et/ou de refroidissement (16) et un boîtier (14 ; 26, 27, 28) comprenant une fenêtre (12) laissant passer les infrarouges, **caractérisé en ce que** le détecteur d'infrarouges est disposé à l'extrémité avant de la pointe de sonde et que l'élément de chauffage et/ou de refroidissement (16) est relié avec conduction thermique à la fenêtre (12).

2. Thermomètre infrarouge selon la revendication 1, **caractérisé en ce que** le détecteur d'infrarouges présente au moins un détecteur de température (18) qui est relié avec conduction thermique à l'élément de détection (20) et/ou à la fenêtre (12) et/ou au boîtier (14 ; 26, 27, 28).

3. Thermomètre infrarouge selon la revendication 2, **caractérisé en ce que** l'élément de chauffage/refroidissement (16) ou l'élément de détection d'infrarouges (20) est utilisable comme détecteur de température (18).

4. Thermomètre infrarouge selon la revendication 2 ou 3, **caractérisé en ce que** la fenêtre (12) est composée d'un semi-conducteur et que l'élément de chauffage (16) et/ou le détecteur de température (18) est constitué dans la fenêtre par dopage d'une zone en forme de piste conductrice.

5. Thermomètre infrarouge selon la revendication 2 ou 3, **caractérisé en ce que** l'élément de chauffage et/ou refroidissement (16) et/ou le détecteur de température (18) est composé d'une piste conductrice ou d'une pâte appliquée sur un film.

6. Thermomètre infrarouge selon la revendication 5, **caractérisé en ce que** les éléments de détection (20) sont disposés sur la face supérieure d'un film et que, sur la face inférieure du film, est(sont) disposé(s) l'élément de chauffage/refroidissement (18) et/ou le détecteur de température (18).

7. Thermomètre infrarouge selon la revendication 3, **caractérisé en ce que** l'élément de chauffage et/ou de refroidissement (16) est relié avec conduction thermique à une plaque de répartition de chaleur (15) et que la plaque de répartition de chaleur (15) est reliée avec conduction thermique au boîtier.

8. Thermomètre infrarouge selon une des revendications précédentes, **caractérisé en ce que** la fenêtre (12) et le boîtier (14 ; 26, 27, 28) sont reliés l'un à l'autre avec conduction thermique et sont composés de matériaux à haute conductibilité thermique.

9. Thermomètre infrarouge selon une des revendications précédentes, **caractérisé en ce que** la fenêtre (12) est réalisée sous forme d'une lentille.

10. Thermomètre infrarouge selon une des revendications précédentes, **caractérisé en ce qu'**une partie supérieure de boîtier (27) du détecteur d'infrarouges présente une ouverture dont les parois latérales (25) sont biseautées.

11. Thermomètre infrarouge selon la revendication 9 ou 10, **caractérisé en ce que** l'élément de détection d'infrarouges (20) ou les éléments de détection d'infrarouges du dispositif (24) sont composés d'au moins une thermopile.

12. Thermomètre infrarouge selon une des revendications précédentes, **caractérisé en ce que** le thermomètre infrarouge ou le détecteur d'infrarouges présente un dispositif de commande pour régler la puissance de chauffage/refroidissement de l'élément de chauffage et/ou de refroidissement (16).

13. Thermomètre infrarouge selon la revendication 12, **caractérisé en ce que** la température du détecteur d'infrarouges peut être déterminée par le dispositif de commande en mesurant certaines grandeurs caractéristiques de l'élément de chauffage/refroidissement (16) ou de l'élément de détection d'infrarouges (20) ou du détecteur de température (18).

14. Thermomètre infrarouge selon la revendication 11, **caractérisé en ce que** la pointe de sonde est flexible.
